# EUROPÄISCHE PATENTANMELDUNG

(11) **EP 0 858 728 A1**
(43) Veröffentlichungstag der Anmeldung: **19.08.1998**
(21) Anmeldenummer: 98101032.5
(22) Anmeldetag: 22.01.1998
(51) Int. Cl.: A01B 49/06

(54) **Landwirtschaftliche Bestellkombination**

(30) Priorität: 17.02.1997 DE 19705958
(71) Anmelder: Amazonen-Werke H. Dreyer GmbH & Co. KG, D-49205 Hasbergen (DE)
(72) Erfinder: Dreyer, Heinz, Dipl.-Ing. Dr., 49205 Hasbergen (DE)

(57) **Zusammenfassung**

Landwirtschaftliche Bestellkombination, die von einer Zugmaschine gezogen wird, bestehend aus einem sich auf Laufräder (4) abstützenden Rahmen (3) mit Zugdeichsel (5), einem auf dem Rahmen angeordneten Vorratsbehälter, von dem aus über Förder- und Verteileinrichtungen von zumindest einem Dosierorgan das Material den Ausbringelementen in einstellbaren Mengen zugeführt wird, und mit am Rahmen angeordneten Bodenbearbeitungswerkzeugen. Vor der Zugdeichsel des Rahmens ist eine motorisch angetriebene Bodenbearbeitungswerkzeuge aufweisende Bodenbearbeitungsmaschine (2) mit höheneinstellbaren Tiefenführungselementen angeordnet. Auf der Rückseite der Bodenbearbeitungsmaschine befindet sich eine Kupplungseinrichtung (25). An dieser Kupplungseinrichtung (25) ist die Zugdeichsel (5) ankuppelbar.

## Beschreibung

Die Erfindung betrifft eine landwirtschaftliche Bestellkombination gemäß des Oberbegriffes des Patentanspruches 1.

Eine derartige landwirtschaftliche Bestellkombination ist in der Praxis bekannt geworden und wird für die Mulchsaat eingesetzt. Diese landwirtschaftliche Bestellkombination wird von einer Zugmaschine, beispielsweise ein Ackerschlepper gezogen, und weist einen Rahmen mit einer Zugdeichsel auf. Auf dem Rahmen ist ein Vorratsbehälter angeordnet, von dem aus über Förder- und Verteileinrichtungen das von einem Dosierorgan dosierte Material den Ausbringelementen in einstellbarer Menge zugeführt werden kann. Am Rahmen sind weiterhin nichtangetriebene Bodenbearbeitungswerkzeuge angeordnet, mit denen der Boden bearbeitet werden kann, so daß in dem bearbeiteten Boden das Saatgut ablegbar ist. Es hat sich nunmehr gezeigt, daß bei der Einsaat von Getreide nach Körnermais, bei diesem Einsatzfall befindet sich noch sehr viel Pflanzenmasse auf dem Feld oder bei sehr feuchten Verhältnissen, das Arbeitsergebnis nicht zufriedenstellend ist.

Der Erfindung liegt die Aufgabe zugrunde, hier Abhilfe zu schaffen.

Diese Aufgabe wird erfindungsgemäß durch die kennzeichnenden Merkmale des Anspruches 1 gelöst. Infolge dieser Maßnahmen wird in überraschend einfacher Weise mit dem Einsatz einer motorisch angetriebene Bodenbearbeitungswerkzeuge aufweisenden Bodenbearbeitungsmaschine eine gute Einarbeitung bzw. Einmischung der Pflanzenmasse in den Boden erreicht. Die Bestellmaschine mit der Säeinrichtung wird einfach an die die motorisch angetriebene Bodenbearbeitungswerkzeuge aufweisende Bodenbearbeitungsmaschine angehängt.

Die Tiefenführungselemente dieser Bodenbearbeitungsmaschine können als Laufräder oder als Walze ausgebildet sein. Es ist möglich, zusätzlich zu den motorisch angetriebenen Werkzeugen der Bodenbearbeitungsmaschine auch die nichtangetriebenen Bodenbearbeitungswerkzeuge der Bestellkombination einzusetzen oder sie aber in die Außerbetriebstellung auszuheben.

Damit am Feldende einfach und ohne Beschädigungsgefahr der Maschine gewendet werden kann, ist vorgesehen, daß die Zugdeichsel eine derartige Länge aufweist, die zumindest der halben Breite der Bodenbearbeitungsmaschine entspricht. Um eine ausreichende Länge der Zugdeichsel zu erreichen kann u.a. vorgesehen sein, daß an der Zugdeichsel zum Ankuppeln an die Kupplungseinrichtung der Bodenbearbeitungsmaschine ein Verlängerungselement anbringbar ist. Es ist jedoch auch denkbar, die kürzere Zugdeichsel gegen die erforderliche längere Zugdeichsel auszutauschen.

Um' ein einfaches Ausheben der die motorisch angetriebenen Bodenbearbeitungswerkzeuge aufweisenden Bodenbearbeitungsmaschine mit der angehängten Bestellmaschine zu erreichen, ist vorgesehen, daß die Kupplungseinrichtung hydraulisch verschwenkbar ausgebildet ist. Hierbei kann die Kupplungseinrichtung derart mit dem Dreipunktkraftheber der Zugmaschine verknüpft sein, daß beim Anheben der Bodenbearbeitungsmaschine durch den Dreipunktkraftheber die Kupplungseinrichtung abgesenkt wird, und daß beim Absenken der Bodenbearbeitungsmaschine durch den Dreipunktkraftheber die Kupplungseinrichtung angehoben wird.

Weitere Einzelheiten der Erfindung sind der Beispielsbeschreibung und den Zeichnungen zu entnehmen. Hierbei zeigen
- Fig.1: die Bestellkombination in Arbeitsposition, in Seitenansicht und in Prinzipdarstellung,
- Fig.2: die Bestellkombinaion in Arbeitsposition, wobei jedoch die nichtangetriebenen Bodenbearbeitungswerkzeuge ausgehoben sind,
- Fig.3: die Bestellkombination in Transportstellung und
- Fig.4: die Bestellkombination ausschnittsweise in der Draufsicht.

Die Bestellkombination besteht aus der Mulchsaatkombination 1 und der Bodenbearbeitungsmaschine 2. Die Mulchsaatkombination 1 weist den Tragrahmen 3 mit dem Fahrwerk 4 und der Zugdeichsel 5 auf. Im vorderen Bereich des Tragrahmens 3 ist der Dreipunktkraftheber 6 angeordnet. Der Dreipunktkraftheber 6 ist als parallelogrammartige Halterung ausgebildet. Der Dreipunktkraftheber 6 weist die beiden unteren Lenker 6' den Oberlenker 6'' auf. Die Unterlenker 6' sind über das Gelenk 7 nach vorn verlängert. Die Vorderseiten der unteren Lenker 6' sind mit einem Verbindungsbalken miteinander verbunden. An diesem Verbindungsbalken greift der Hydraulikzylinder 8 an. Der Hydraulikzylinder 8 stützt sich am Rahmen 9 des Dreipunktkrafthebers 6, der an dem Tragrahmen 3 befestigt ist, ab. An dem Dreipunktkraftheber 6 ist das die nichtangetriebenen Werkzeuge aufweisende Bodenbearbeitungsgerät 10 mit der Nachlaufwalze 11 angeordnet. Die Nachlaufwalze 11 ist gegenüber dem Bodenbearbeitungsgerät 10 über die Höhenverstellungseinrichtung 12 in der Höhenlage gegenüber dem Bodenbearbeitungsgerät 10 einstellbar, so daß die Bodenwalze 11 die Eindringtiefe der Bodenbearbeitungswerkzeuge 13 des Bodenbearbeitungsgerätes 10 in den Boden 14 bestimmt. Die Bodenbearbeitungswerkzeuge 13 sind in drei Querreihen hintereinander angeordnet. Vor den Bodenbearbeitungswerkzeugen 13 ist ein in Höhenrichtung verstellbarer Planierbalken 15, der sich über die Arbeitsbreite des Bodenbearbeitungsgerätes 10 erstreckt, am Rahmen 10 des Bodenbearbeitungsgeätes 10 angeordnet.

Dadurch, daß der Planierbalken 15 an dem über eine parallelogrammartige Halterung, die durch den Dreipunktkraftheber 4 gebildet wird, aufgehängten Rahmen 10' des Bodenbearbeitungsgerätes 10 befestigt ist, wird eine gute Höhenführung des Planierbalkenssss 15 und somit ein gutes Einebnen des Bodens erreicht. Das Planierschild 15 kann gegen die Kraft der Felder 15' beim Auftreffen auf Hindernisse die Gelenkachse 15'' nach hinten-oben ausweichen.

Auf der Rückseite des Tragrahmens 3 ist der Vorratsbehälter 16 für das Saatgut angeordnet. Im unteren Bereich des Vorratsbehälters 16 ist eine Dosiervorrichtung angeordnet, die das Saatgut über eine Schleuse in eine Förderleitung 17 einspeist. Diese Förderleitung 17 ist auf der einen Seite mit einem Gebläse und auf der anderen Seite mit einem Verteilerkopf 18 verbunden. Von dem Verteilerkopf 18 aus führen flexible Saatleitungen 19 zu hinter den Laufrädern 4 angeordneten Säscharen 20, die an einer Säschiene 21 in aufrechter Ebbene bewegbar mittels Gelenke angelenkt sind. Das Saatgut wird also pneumatisch von dem Vorratsbehälter 16 zu den Säscharen 20 gefördert. Die Sämaschine 21 ist mittels einer als Dreipunktkupplung ausgebildeten Halterung 22 aushebbar und absenkbar an der Rückseite des Tragrahmens 3 angeordnet.

Die Bodenbearbeitungswerkzeuge 13 sind als nicht angetriebene Bodenbearbeitungszinken, wie beispielsweise Kultivarzinken ausgebildet. Die Bodenwalze 11 kann als Stabwalze, Zahnpackerwalze, Reifenpackerwalze, als Gußscheibenwalze etc. ausgebildet sein. Hinter den Laufrädern 4 sind am Rahmen 23 der Säschiene 21 die Spurlockerer 24 angeordnet. Die Zugdeichsel 5 ist an die Kupplungseinrichtung 25, die die beiden Unterlenker 26 aufweist, angekuppelt.

Wenn die Mulchsaatkombination zur Einsaat von Getreide, beispielsweise nach Körnermais, wenn sich noch sehr viel Pflanzenmasse auf dem Feld befindet eingesetzt werden soll, wird die Mulchsaatkombination 1 mit der Bodenbearbeitungsmaschine 2, die motorisch angetriebene Bodenbearbeitungswerkzeuge 27 aufweist, eingesetzt. Hierzu wird eine Zugdeichsel 5 eingesetzt, die eine derartige Länge aufweist, die zumindest der halben Breite der Bodenbearbeitungsmaschine 2 entspricht. Die Bodenbearbeitungsmaschine 2 ist als Kreiselgrubber 28 mit nachgeordneter Nachlaufwalze 29 ausgebildet. Die Bodenbearbeitungsmaschine 2 ist über die Dreipunktkupplungselemente 30 mit dem Dreipunktkraftheber 31 der Zugmaschine 32 verbunden. An dem Rahmen der Bodenbearbeitungsmaschine 2 ist die Kupplungseinrichtung 25, die die Unterlenker 26 aufweist, angeordnet. Den Unterlenkern 26 ist zumindest ein Hydraulikzylinder 33 zugeordnet, um die Kupplungseinrichtung 25 auf- und abschwenken zu können. An Stelle der Nachlaufwalze 29 könne auch Laufräder eingesetzt werden.

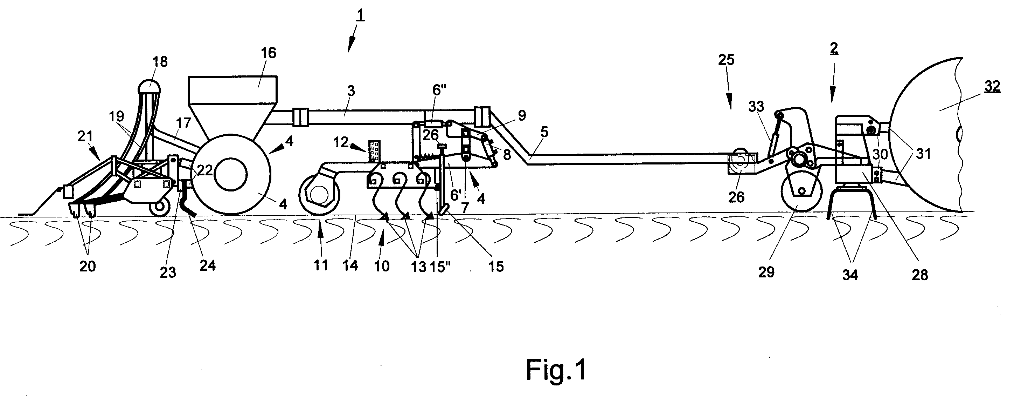

Während eines Einsatzes, beispielsweise unter schwierigen Verhältnissen, wird die Bestellkombination gemäß Fig.1 eingesetzt, d.h. sowohl die motorisch angetriebenen Werkzeuge 34 der Bodenbearbeitungsmaschine 2 wie auch die nichtangetriebenen Werkzeuge 13 des Bodenbearbeitungsgerätes 10 bearbeiten den Boden.

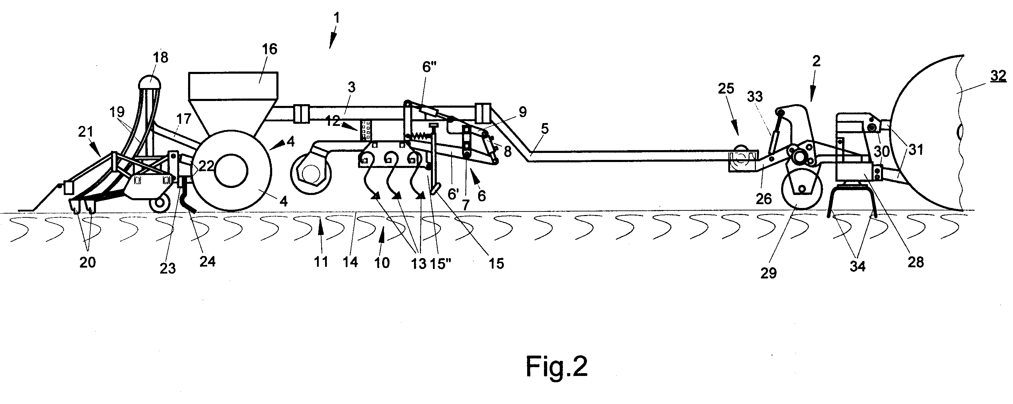

In einigen Fällen, wie Fig. 2 zeigt, reicht es jedoch auch aus, wenn nur die motorisch angetriebenen Werkzeuge 34 der Bodenbearbeitungsmaschine 2 den Boden bearbeiten. Dieses ist dann der Fall, wenn der Boden relativ leicht ist, sich jedoch noch sehr viel Pflanzenmasse auf der Bodenoberfläche befindet. In diesem Falle wird über den Dreipunktkraftheber 6 das Bodenbearbeitungsgerät 10 aus dem Boden 10 ausgehoben.

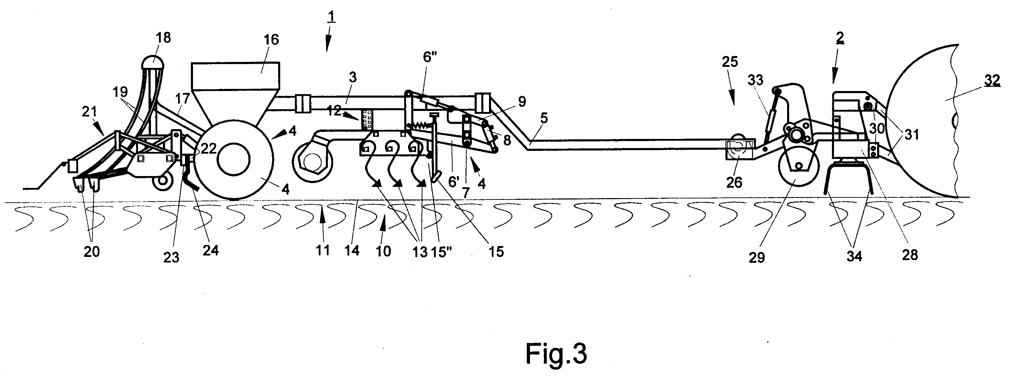

Zum Transport wird, wie Fig.3 zeigt, über den Dreipunktkraftheber 31 die Bodenbearbeitungsmaschine 2 ausgehoben. Weiterhin wird über den Dreipunktkraftheber 6 das Bodenbearbeitungsgerät 10 angehoben. Die Säeinrichtung 21 wird durch die Dreipunktkupplung 22 ausgehoben. Hierbei ist der Hydraulikzylinder 33 der Kupplungseinrichtung 25 derart mit dem Dreipunktkraftheber 31 der Zugmaschine 32 verknüpft, daß beim Anheben der Bodenbearbeitungsmaschine 2 durch den Dreipunktkraftheber 31 die Kupplungseinrichtung 25 abgesenkt wird, wie die Fig.3 zeigt. Beim Absenken der Bodenbearbeitungsmaschine 2 durch den Dreipunktkraftheber 31 wird die Kupplungseinrichtung 25 angehoben.

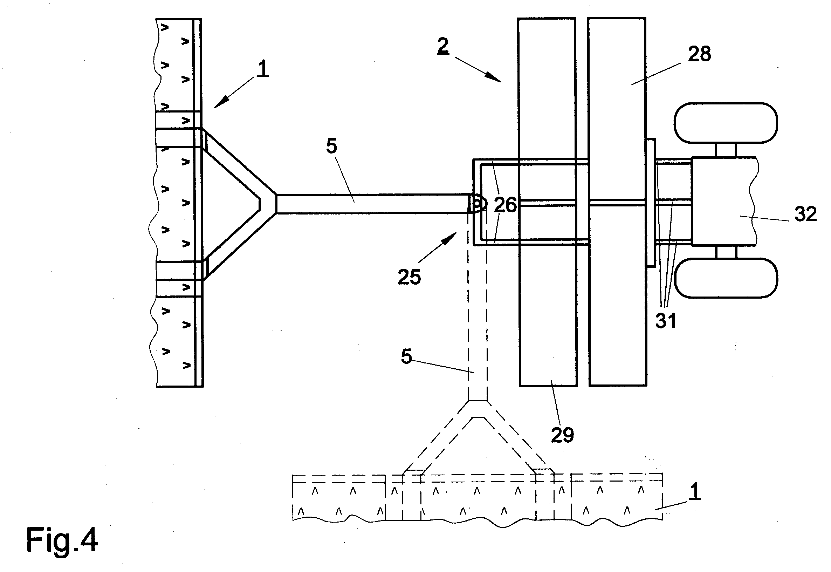

Fig.4 zeigt die erforderliche Länge der Zugdeichsel 5 beim Wenden, damit die Mulchsaatkombination 1 nicht mit der Bodenbearbeitungsmaschine 2 zusammenstößt. Somit ist ein sehr enges Wenden möglich.

## Patentansprüche

1. Landwirtschaftliche Bestellkombination, die von einer Zugmaschine gezogen wird, bestehend aus einem sich auf Laufräder abstützenden Rahmen mit Zugdeichsel, einem auf dem Rahmen angeordneten Vorratsbehälter, von dem aus über Förder- und Verteileinrichtungen von zumindest einem Dosierorgan das Material den Ausbringelementen in einstellbaren Mengen zugeführt wird, und mit am Rahmen angeordneten Bodenbearbeitungswerkzeugen, dadurch gekennzeichnet, daß vor der Zugdeichsel (5) des Rahmens (3) eine motorisch angetriebene Bodenbearbeitungswerkzeuge (34) aufweisende Bodenbearbeitungsmaschine (2, 34) mit höheneinstellbaren Tiefenführungselementen (29) angeordnet ist, daß auf der Rückseite der Bodenbearbeitungsmaschine (2, 34) eine Kupplungseinrichtung (25) sich befindet, daß an dieser Kupplungseinrichtung (25) die Zugdeichsel (5) ankuppelbar ist.

2. Bestellkombination nach Anspruch 1, dadurch gekennzeichnet, daß die Tiefenführungselemente (29) der Bodenbearbeitungsmaschine (2, 34) als Laufräder oder als Walze (29) ausgebildet sind.

3. Bestellkombination nach Anspruch 1, dadurch gekennzeichnet, daß die Zugdeichsel (5) eine derartige Länge aufweist, die zumindest der halben Breite der Bodenbearbeitungsmaschine (2, 34) entspricht.

4. Bestellkombination nach einem oder mehreren der vorstehenden Ansprüche, dadurch gekennzeichnet, daß die Kupplungseinrichtung (25) hydraulisch verschwenkbar ist.

5. Bestellkombination nach einem oder mehreren der vorstehenden Ansprüche, dadurch gekennzeichnet, daß die Kupplungseinrichtung (25) derart mit dem Dreipunktkraftheber (31) der Zugmaschine (32) verknüpft ist, daß beim Anheben der Bodenbearbeitungsmaschine (2, 34) durch den Dreipunktkraftheber (31) die Kupplungseinrichtung (25) abgesenkt wird, und daß beim Absenken der Bodenbearbeitungsmaschine (2, 34) durch den Dreipunktkraftheber (31) die Kupplungseinrichtung (25) angehoben wird.

6. Bestellkombination nach einem oder mehreren der vorstehenden Ansprüche, dadurch gekennzeichnet, daß an der Zugdeichsel (5) zum Ankuppeln an die Kupplungseinrichtung (25) der Bodenbearbeitungsmaschine (2, 34) ein Verlängerungselement anbringbar ist.
